# EUROPEAN PATENT APPLICATION

(11) **EP 4 748 359 A1**
(43) Date of publication of application: **27.05.2026**
(21) Application number: 25216159.1
(22) Date of filing: 17.11.2025
(51) Int. Cl.: A61G 3/06, B65G 69/30, E04F 11/00, E04G 27/00

(54) **RAMP**

(30) Priority: 26.11.2024 GB 202417336
(71) Applicant: Enable Access (Holdings) Limited, Leighton Buzzard LU7 4UH (GB)
(72) Inventor: MORRISH, Gerald David, Leighton Buzzard, LU7 4UH (GB)
(74) Representative: Mewburn Ellis LLP

(57) **Abstract**

A ramp comprising a ramp body having an upper ramp surface for supporting a user, and a lip member mounted at or proximate to an end of the ramp body. The lip member comprises a foot extending downwardly from the ramp body to support the ramp body on a surface in use.

## Description

### FIELD

The present disclosure relates to a ramp and a method of manufacturing a ramp.

### BACKGROUND

It is known to use ramps to provide a transition between two different surfaces, which may for example be at different heights. Such ramps can facilitate access, such as for people in wheelchairs, people with mobility impairments, or people pushing pushchairs/prams.

One type of ramp is a threshold ramp. A threshold ramp helps people move over a small step (such as a door threshold) by providing a surface that transitions from a lower floor level to the top of the step. To be able to provide sufficient support, such ramps are formed of materials of sufficient strength and rigidity (such as metals). Such materials can, however, cause damage to surfaces of the threshold against which the ramp rests. For example, plastic (e.g. PVC) thresholds may be particularly susceptible to such damage.

### SUMMARY

In a first aspect there is disclosed a ramp (e.g. threshold ramp) comprising: a ramp body having an upper ramp surface for supporting a user; and a lip member mounted at or proximate to an end of the ramp body, the lip member comprising a foot extending downwardly from the ramp body to support the ramp on a (e.g. threshold) surface in use.

The provision of the foot helps to space the ramp body from the surface (e.g. threshold) surface upon which the ramp is supported. This may avoid contact between the ramp body and the surface, which could otherwise cause wear or damage to the surface. In this way, the lip member may provide protection against such wear or damage. This may be especially useful when the ramp is used to provide access over a threshold formed of a plastic material such as PVC (or uPVC).

For example, some thresholds include a raised ledge which can aid in sealing against, for example, a door. The foot of the lip member may raise the end of the ramp body in use (i.e. beyond the position in which the ramp would sit if the foot were omitted). This may allow the end of the ramp to clear, or to be better aligned with, the ledge so as to provide for a better transition onto the threshold.

For the avoidance of doubt, the lip member and ramp body are separate (i.e. non-integrally formed) parts that are attached to one another.

At least a portion of the lip member may be formed of a first material and the ramp body may be formed of a second material that is different to the first material. The first material may be more elastic than the second material (the second material may be stiffer than the first material). The first material may thus have a lower Young's modulus than the second material. In other words, the lip member (e.g. at least the portion formed of the first material) may more readily deform than the ramp body under a given force.

The first material may be non-metallic (e.g. the lip member may comprise a non-metallic material). The first material may be e.g. a polymer. The first material may be polyvinyl chloride (PVC). The first material may be unplasticized PVC or unplasticized PVC (uPVC).

The ramp body may be formed of (i.e. the second material may be) metal. For example, the ramp body may be formed of e.g. aluminium.

The lip member may comprise an outer element and an inner element. The inner element may mount the outer element to the ramp body. The outer element may be in the form of a protective layer. The inner element may thus extend across a surface of the outer element.

The inner element may be formed of a different material to the outer element. The outer element may be formed of a material that is more elastic than the material of the inner element (the material of the inner element may be stiffer than the material of the outer element). The material of the outer element may have a lower Young's modulus than the material of the inner element. Accordingly, the outer element may more readily deform than the inner element under a given force.

The inner element may, for example, be formed of plasticized PVC and the outer element may be formed of unplasticized PVC.

The inner element and outer element may be coextruded. The outer element may have a substantially uniform cross-sectional shape along its length. The inner element may have a substantially uniform cross-sectional shape along its length. The lip member may have a substantially uniform cross-sectional shape along its length (i.e. regardless of whether the lip member is formed of an inner element and an outer element).

The ramp body may have a lower surface. The lower surface may be opposite to the upper ramp surface.

A tip of the foot (i.e. a free distal end of the foot) may be between 5 and 20 mm from the lower surface of the ramp (e.g. the foot may have a height from the lower surface of the ramp of 5 to 20 mm).

The lip member may extend partly across the lower surface of the ramp body. The lip member may comprise a flange that extends partly across the lower surface of the ramp body. The flange may extend from the foot in a direction away from the end of the ramp body (e.g. towards an opposite end of the ramp body). The flange may be tapered (e.g. may narrow inwardly in a direction of extension of the flange).

The lip member may be adhered to the ramp body. For example, the lip member may be adhered to the lower surface of the ramp body. That is, the lip member may be mounted to the ramp body by adhesive provided between the lower surface of the ramp body and the lip member (e.g. the flange of the lip member).

The lip member may comprise a protection portion extending at least partway over an edge of the ramp body at the end of the ramp body. The protection portion may be arranged to act as a barrier between an edge of the ramp body and a surface of a threshold. The protection portion may comprise a rounded (e.g. curved convex) outer surface.

The lip member may extend partway across both the lower surface and the edge. In this way, the lip member may act as a barrier to contact between the lower surface and/or the end surface with a threshold surface on which the ramp may be supported in use.

The ramp may be a portable ramp. The ramp may comprise a grip portion for a user to grip the ramp. The ramp may comprise a handle.

The ramp may be a threshold ramp. The end of the ramp body may be a first end. The ramp body may comprise a second end opposite to the first end. The first end may be configured to be supported on a threshold. The second end may be configured to be supported on a surface that is below (i.e. lower than) the threshold, such as a ground level surface.

The upper ramp surface may comprise a first end region at the first end of the ramp body. The upper ramp surface may comprise a second end region at the second end of the ramp body. The upper ramp surface may comprise a central region interposed between the first and second end regions.

The first end region may extend on a decline from the central region (e.g. an angle of greater than 180 degrees may be formed between the first end region and the central region). The second end region may extend on an incline from the central region (e.g. an angle of less than 180 degrees may be formed between the second end region and the central region).

In a second aspect, there is disclosed a method of manufacturing a ramp, the method comprising: coextruding an outer element and an inner element to form a lip member, the lip member comprising a foot; and mounting the lip member at or proximate to an end of a ramp body having an upper ramp surface for supporting a user such that the foot extends downwardly from the ramp body.

The ramp may be as otherwise described with respect to the first aspect (i.e. the ramp may be according to the first aspect). The ramp body may comprise one or more features of the ramp body of the first aspect. The lip member may comprise one or more features of the lip member of the first aspect.

The mounting of the lip member may comprise mounting the inner element to the ramp body.

In a third aspect, there is disclosed a lip member comprising a mounting portion for mounting the lip member to an end of a ramp body of a ramp (e.g. threshold ramp); and a foot extending downwardly from the mounting portion to support the ramp on a (e.g. threshold) surface in use.

The lip member may be as otherwise described with respect to the first aspect (i.e. may comprise one or more features of the lip member of the first aspect).

### DESCRIPTION OF DRAWINGS

Embodiments of the disclosure are set out below in detail, with reference to the accompanying drawings, in which:
FIG. 1 is a perspective view of a threshold ramp; and
FIG. 2 is a detail section view of an end of the threshold ramp of FIG. 1.

### DETAILED DESCRIPTION

The following detailed description of the present disclosure is made by way of example.

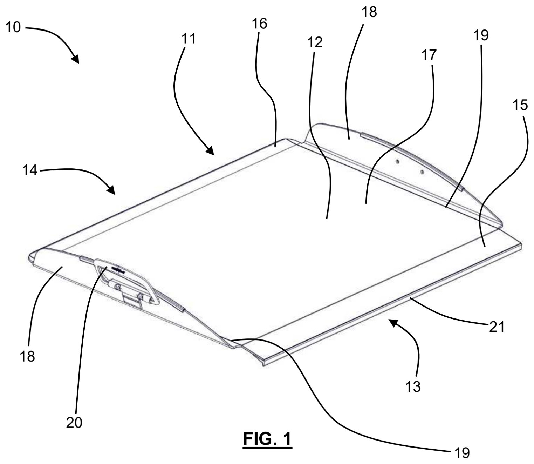

FIG. 1 illustrates a ramp 10 that is in the form of a threshold ramp for providing an inclined surface onto a threshold from a lower surface adjacent to the threshold. The ramp 10 may, for example, facilitate wheelchair access over or onto the threshold. In the illustrated example, the ramp 10 is a portable ramp (i.e. it can be removed from the threshold when not in use, and optionally transported to other locations).

The ramp 10 include a ramp body 11 (formed of aluminium in the illustrated example) having an upper ramp surface 12 for supporting a user in use. The upper ramp surface 12 is substantially planar, and may be provided with a surface texture to provide grip to a user.

The ramp body 11 has a first end 13 and a second end 14, which is opposite to the first end 13. The first end 13 of the ramp body 11 is intended, in use, to be supported on a threshold, while the second end 14 is intended to be supported on a lower surface (e.g. a ground surface) adjacent the threshold. As may be appreciated, when the ramp body 11 is supported in this manner, the upper ramp surface 12 provides an inclined transition surface onto the threshold. To aid in this transition, the upper ramp surface 12 includes a first end region 15 at the first end 13 of the ramp body 11 and a second end region 16 at the second end 14 of the ramp body 11. The first end region 15 is arranged so as to be slightly declined with respect to a (main) central region 17 of the upper ramp surface 12, while the second end region 16 is arranged so as to be slightly inclined with respect to the central region 17.

The ramp body 11 is also provided with two ramp kerbs 18 that extend upwardly (on a slope) from lateral edges 19 of the upper ramp surface 12 (the lateral edges 19 extending between the first end 13 and the second end 14). A handle 20 is mounted to one of the ramp kerbs 18, which allows a user to carry the ramp 10 (i.e. providing the ramp 10 with portability).

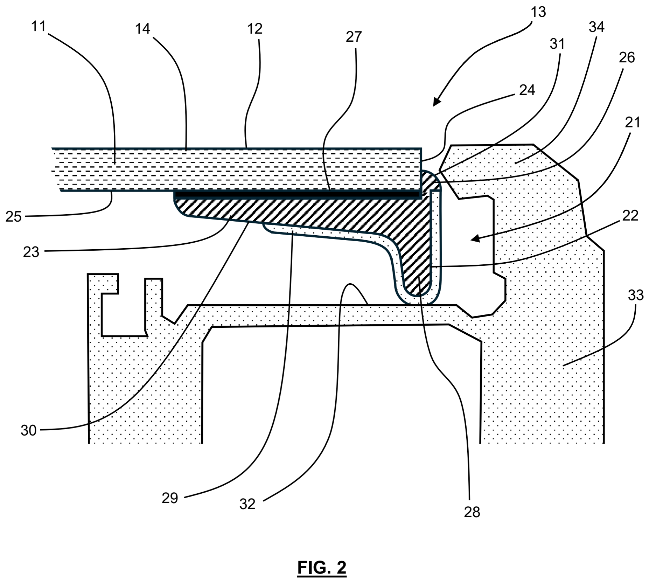

A lip member 21 is mounted at the first end 13 of the ramp body 11. This lip member 21 is shown in more detail in Figure 2. Although Figure 2 only shows a section of the lip member 21, it should be appreciated that the lip member 21 extends for substantially the full length of the first end 13 of the ramp body 11 (i.e. along an edge 24 of the ramp body 11 at the first end 13). The lip member 21 includes a foot 22 that extends downwardly from the ramp body 11 to support the ramp 10 on a threshold surface 32 of a threshold 33 in use. This provides additional grip and raises the upper ramp surface 12, which can allow the upper ramp surface 12 to better align with a ledge 34 of the threshold 33.

The lip member 21 includes a flange 23 that extends rearwardly from the first end 13 (i.e. from the edge 24 of the ramp body 11 at the first end 13). This flange 23 thus extends across a lower surface 25 of the ramp body 11 and layer of adhesive 27 is provided between the flange 23 and the lower surface 25 to mount the lip member 21 to the ramp body 11. The flange 23 has a tapered shape, so as to taper in the rearward direction (i.e. the direction away from the first end 13 and towards the second end 14 of the ramp body 11). This means that the flange 23 is narrower at an end of the flange 23 that is distal from the foot 22.

The lip member 21 also wraps around the first end 13 of the ramp body 11 such that a protection portion 26 of the lip member 21 partly covers the edge 24 at the first end 13 of the ramp body 11. The protection portion 26 acts as a bumper to prevent damage to the threshold 33 on which first end 13 of the ramp 10 is supported.

Accordingly, the lip member 21 has a generally T-shaped profile, with the protection portion 26 and foot 22 providing the arms of the T shape, and the flange 23 providing the stem.

The lip member 21 is formed of a plastic inner element 28 (which provides a main body of the lip member 21) and an outer element 29, which is in the form of a protective layer. In particular, the inner element 28 and outer element 29 are coextruded to form the lip member 21. The outer element 29 is formed of a more elastic material than that of the inner element 28. Accordingly, the inner element 28 can provide the lip member 21 with sufficient strength to support the ramp body 11 in use, while the outer element 29 aids in the prevention of damage to any surface with which the lip member 21 may come into contact, and may also aid in gripping a threshold surface.

As may be appreciated from Figure 2, the outer element 29 does not cover the entirety of the inner element 28. Rather, the outer element 29 extends from the protection portion 26, around the foot 22 and partway along an outer surface of the flange 23. The outer element 29 is recessed adjacent to the protection portion 26, which ensures that an outer surface 30 of the outer element 29 is flush with an outer concave surface 31 of the protection portion 26.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a", "an", and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, ±10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the disclosure, or from the scope of the claims.

## Claims

1. A ramp comprising:
a ramp body having an upper ramp surface for supporting a user, and
a lip member mounted at or proximate to an end of the ramp body, the lip member comprising a foot extending downwardly from the ramp body to support the ramp body on a surface in use.

2. A ramp according claim 1, wherein at least a portion of the lip member is formed of a different material to the ramp body.

3. A ramp according to claim 2, wherein the ramp body, wherein at least a portion of the lip member is formed of a material that is more elastic than a material of the ramp body.

4. A ramp according to any one of the preceding claims, wherein the ramp body is formed of metal.

5. A ramp according to any one of the preceding claims, wherein the lip member comprises a non-metallic material.

6. A ramp according to any one of the preceding claims, wherein the lip member comprises an outer element and an inner element mounting the outer element to the ramp body.

7. A ramp according to claim 6, wherein the outer element is formed of a material that is different to the material of the inner element.

8. A ramp according to claim 6 or 7, wherein the outer element is formed of a material that is more elastic than a material of the inner element.

9. A ramp according to any one of claims 6 to 8, wherein the inner element and the outer element are coextruded.

10. A ramp according to any one of the preceding claims, wherein the lip member extends partly across a lower surface of the ramp body, the lower surface being opposite to the upper ramp surface.

11. A ramp according to claim 10, wherein the lip member is mounted to the ramp body by adhesive provided between the lower surface of the ramp body and the lip member.

12. A ramp according to any one of the preceding claims, wherein the lip member comprises a protection portion that extends at least partway over an edge of the ramp body at the end of the ramp body.

13. A ramp according to any one of the preceding claims that is a portable ramp.

14. A method of manufacturing a ramp, the method comprising:
coextruding an outer element and an inner element to form a lip member, the lip member comprising a foot; and
mounting the lip member at or proximate to an end of a ramp body having an upper ramp surface for supporting a user such that the foot extends downwardly from the ramp body.

15. A method according to claim 14, wherein mounting the lip member comprises mounting the inner element to the ramp body.
